# EUROPÄISCHE PATENTSCHRIFT

(11) **EP 1 858 614 B1**
(45) Veröffentlichungstag und Bekanntmachung des Hinweises auf die Patenterteilung: **16.06.2010**
(21) Anmeldenummer: 06706930.2
(22) Anmeldetag: 14.02.2006
(51) Int. Cl.: B01D 25/21, B01D 25/28, B01D 35/18

(54) **VORRICHTUNG UND VERFAHREN ZUR THERMISCHEN TROCKNUNG VON FILTERKUCHEN IN MEMBRANKAMMERFILTERPRESSEN**
DEVICE AND METHOD FOR THERMALLY DRYING FILTER CAKES IN DIAPHRAGM-FILTER PRESSES
DISPOSITIF ET PROCEDE DE SECHAGE THERMIQUE DE GATEAUX DE FILTRATION DANS DES FILTRES-PRESSES A CHAMBRES ET MEMBRANES

(30) Priorität: 25.02.2005 DE 102005008664
(43) Veröffentlichungstag der Anmeldung: 28.11.2007
(73) Patentinhaber: Bayer Technology Services GmbH, 51368 Leverkusen (DE)
(72) Erfinder: ESSER, Ulrich, 51515 Kürten (DE); MROTZEK, Dieter, 51399 Burscheid (DE); JÜRGEN, Sebastian, 67593 Westhofen (DE)
(86) Internationale Anmeldenummer: PCT/EP2006/001323
(87) Internationale Veröffentlichungsnummer: WO 2006/089662

(56) Entgegenhaltungen:
- DE-A1- 3 819 047
- DE-U1- 20 006 891
- FR-A- 939 957
- US-A- 6 149 806

## Beschreibung

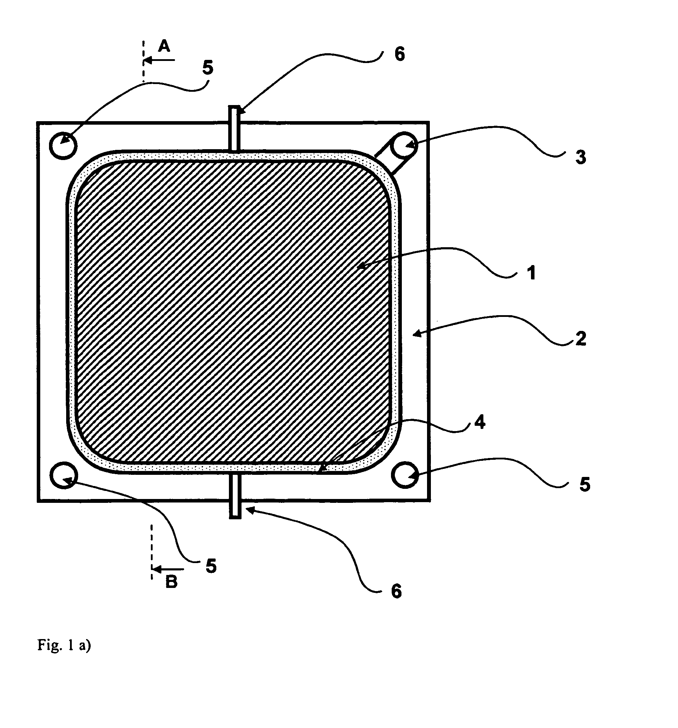

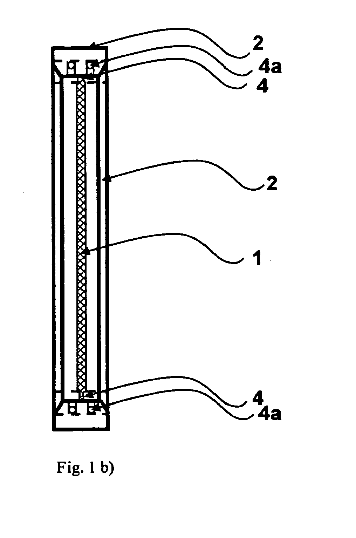

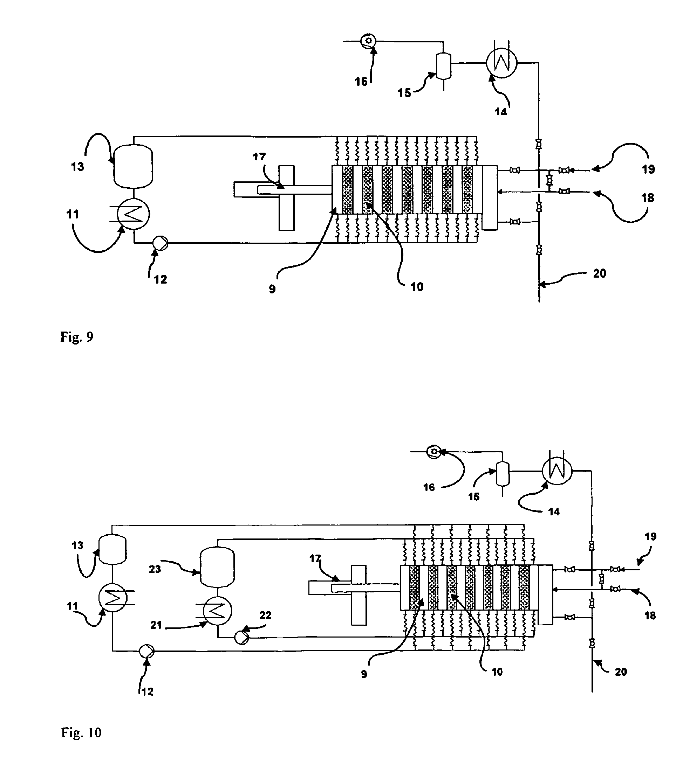

Die Erfindung betrifft eine beheizbare Kammerfilterplatte (Fig. 1-4) bzw. Druck-/Waschplatte mit zugehörigem Rahmen, eine daraus und aus Membrankammerfilterplatten alternierend aufgebaute Filterpresse (Fig. 9-11) und ein Verfahren zur thermischen Trocknung von Filterkuchen in besagter Membrankammerfilterpresse bzw. Membranrahmenfilterpresse.

Eine Filterpresse besteht aus mehreren parallel angeordneten Kammerplatten bzw. aus Druck-/Waschplatten mit zugehörigem Rahmen. Die Kammerplatten besitzen Aussparungen, so dass beim Zusammenfügen von je zwei Platten Kammern entstehen, die unter Zuhilfenahme von Filtermedien (z.B. Tüchern) als Filtrationsräume genutzt werden. Bei den Druck-/Waschplatten wird unter Verwendung von Filtermedien wie z.B. Papier oder Tiefenfiltern durch den zugehörigen Rahmen ein Filtrationsraum zugänglich. Während der Filtration werden die Kammerplatten bzw. die Druck-/Waschplatten mit zugehörigem Rahmen im Rahmenbereich mechanisch oder hydraulisch zusammengepresst, um die Filtrationsräume abzudichten. Die Oberflächen der Platten mit Ausnahme des Rahmenbereiches können strukturiert sein, um ein Abfließen des Filtrats zu ermöglichen.

Zur Abtrennung von Feststoffen aus Suspensionen werden Filterpressen vom Labor- bis zum Prozessmaßstab eingesetzt. Dabei ist von Interesse, in möglichst kurzer Zeit möglichst große Mengen an möglichst trockenem Feststoff und/oder möglichst große Mengen an aufgereinigter Flüssigkeit zu gewinnen.

In einer Membranfilterpresse wird daher in einem ersten Schritt eine Filtration, in der der Filterkuchen gebildet wird, durchgeführt, an die sich ein Waschschritt und/oder ein mechanischer Pressschritt anschließen können. In dem mechanischen Pressschritt wird der Filterkuchen mit Hilfe einer an der Membrankammerplatte befestigten Membran, hinter der ein Pressdruck aufgebaut wird, gepresst und konsolidiert, um die Flüssigkeit, die sich noch im Filterkuchen befindet, zu minimieren.

An den mechanischen Pressschritt kann sich eine temperierte Trocknung anschließen, in der die thermische Vorgabe über das druckaufbauende Medium in den Membrankammerplatten und/oder über mit Heiz- bzw. Kühlelementen ausgerüstete Kammerplatten bzw. Druck-/Waschplatten eingebracht wird, die dann alternierend mit den Membrankammerplatten im Plattenpaket angeordnet sind. Zusätzlich können die Filterkammern über die Filtratablaufkanäle evakuiert werden.

Aus der EP 0 676 225 A und der GB 2 258 621 A sind Filterplatten für Kammerfilterpressen bekannt, die die grundsätzliche Durchführung des beschriebenen Verfahrens erlauben. EP 0 676 225 A beschreibt eine einfache beheizbare Filterplatte und GB 2 258 621 A eine durch das druckaufbauende Medium beheizbare Membranfilterplatte. Die Praxis zeigt jedoch, dass die bei vorgegebenem Energie- und Zeitaufwand erreichbare Restfeuchte des Filterkuchens noch verhältnismäßig hoch ist. Dadurch wird zusätzlich ein getrenntes Trocknungsverfahren erforderlich, um den notwendigen Trockenstoffgehalt des Filterkuchens zu erreichen.

Aus der EP 1 088 580 B1 sind glatte bzw. oberflächenprofilierte beheizbare Kammerplatten, bevorzugt in metallischer Ausführung, bekannt, die abwechselnd mit Membrankammerfilterplatten ein Plattenpaket bilden. Diese Heizplatten sind bevorzugt als starre Wand ausgeführt, so dass in einer Kammer nur über die Fläche, die durch die Membrankammerplatte gebildet wird, Filtrat abfließen und als Waschschritt nur eine Wäsche über den Suspension eintragenden Kanal durchgeführt werden kann. Die Wärmeübertragung auf Suspension oder Filterkuchen ist durch die Ausführung als starre Wand ebenfalls beschränkt. Ferner ist der Feststoffaustrag schwierig, da Filterkuchen an der metallischen Heizwand trotz offenbarter Beschichtung die Tendenz zur Anhaftung zeigen.

In CH 341798 A wird eine gewichtsreduzierte Filterplatte mit einer Plattenumrandung aus Stäben U-förmigen Profils beschrieben, die mit einem aus Wellblech bestehenden Plattenkörper verbunden sind. Dem beschriebenen Plattenkörper wird ansonsten keine weitere Funktion zugeschrieben.

In der DE 38 19 047 A1 werden ebenfalls Platten für Filterpressen offenbart, bei denen ein großflächiger Kontakt zwischen den beschriebenen Übergangsprofilen und dem jeweiligen Mittelteil, sowie auch ein großflächiger Kontakt zwischen den beschriebenen Übergangsprofilen und dem jeweiligen Rahmen besteht.

In keinem der vorgenannten Dokumente des Standes der Technik werden aber temperierbare Kammerfilterplatten oder Druck-/Waschplatten offenbart, bei denen zwischen Rahmen und Heiz- bzw. Kühlkörper ein Zwischenraum ausgebildet wird.

Es stellt sich damit, ausgehend vom bekannten Stand der Technik, die Aufgabe, eine Filterplatte bereitzustellen, deren Oberfläche und Konstruktion eine besonders gute Temperaturübertragung auf Suspension und Filterkuchen ermöglicht, deren Oberfläche eine einfache Filtratabführung und damit auch eine Wäsche des Filterkuchens über die Filtrat abführenden Kanäle ermöglicht, deren Oberfläche und sonstige Ausrüstung einen einfachen und vollständigen Feststoffaustrag des Filterkuchens erlaubt, und dabei einfach und kostengünstig zu fertigen ist. Eine daraus zugängliche Membrankammerfilterpresse und deren Einsatz in einem Filtrationsverfahren soll die Filtrations- und Trocknungszeiten stark verkürzen und die benötigte Temperierleistung minimieren.

Es stellt sich darüber hinaus die Aufgabe, temperierbare Kammerfilterplatten oder Druck-/Waschplatten zur Verfügung zu stellen, die Wärmebrücken zwischen dem Rahmen und dem Heiz/Kühlkörper minimieren.

Gegenstand der Erfindung sind daher die im unabhängigen Anspruch 1 angegebenen temperierbaren Kammerfilterplatten oder Druck-/Waschplatten, mit denen die vorgenannten Aufgaben gelöst werden.

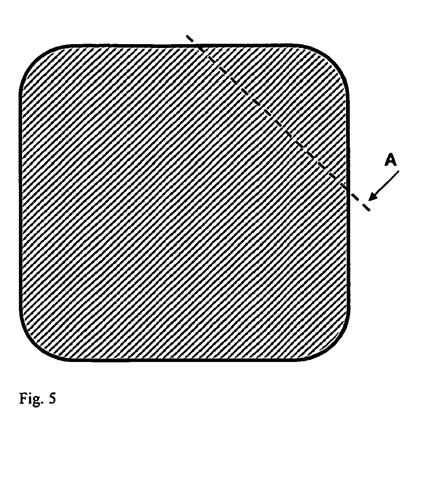

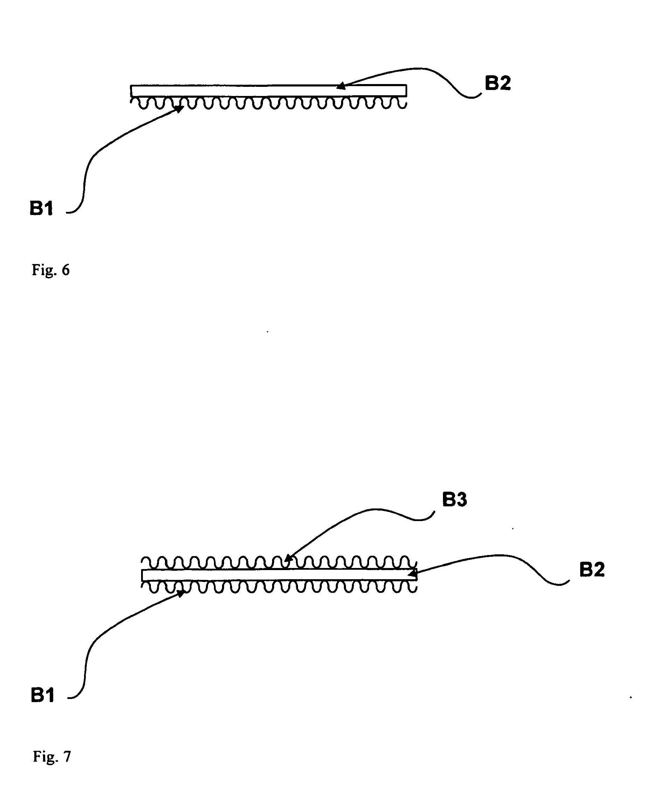

Der Heiz- bzw. Kühlkörper in der erfindungsgemäßen Kammerfilterplatte bzw. Druck-/Waschplatte mit zugehörigem Rahmen besteht bevorzugt aus einem gut temperaturleitenden Material, das chemisch inert ist und gute Temperaturübergänge auf die zu filtrierende Suspension bzw. den zu trocknenden Filterkuchen ermöglicht, bevorzugt aus Metall, temperaturleitfähigen Polymeren, die gewebe-, faser- oder füllstoffverstärkt sein können und/oder aus einem Kombinationsmaterial aus Metall und temperaturleitfähige Polymeren, besonders bevorzugt aus Aluminium oder korrosionsbeständigem Edelstahl, ganz besonders bevorzugt aus korrosionsbeständigem Edelstahl. Um einen Filtratabfluss zu gewährleisten, sind die den Filterkuchenkammern zugewandten Oberflächen des Heiz- bzw. Kühlkörpers strukturiert. Diese Strukturierung besteht bevorzugt aus Wellen, so dass als an die Filterkuchenkammer angrenzender Körper ein einfaches gewelltes Blech verwendet werden kann (Fig. 5). Letztgenannte Ausführung hat den Vorteil, dass durch Verbindung mindestens zweier (Fig. 6, Fig. 7) solcher gewellten Bleche, wobei die Wellen versetzt angeordnet werden, bevorzugt um einen Winkel zwischen 10 und 170° bzw. 190 und 350°, besonders bevorzugt um einen Winkel von 45 bis 135° bzw. 225 bis 315°, besonders bevorzugt um 90 ° bzw. 270°, ein Hohlraum entsteht, in dem die Strömung des Temperiermediums laufend um den eingestellten Winkel umgelenkt wird. Dabei können bei Verwendung von mehr als zwei Wellblechen die Profilierungen um je den gleichen oder um verschiedene Winkel versetzt angeordnet sein, bevorzugt um den gleichen, besonders bevorzugt je um 90° bzw. 270°. Durch diese einfache Anordnung der kostengünstigen Bleche resultiert ein überraschend guter Temperaturübergang von Temperiermedium zu Heiz- bzw. Kühlkörper und damit zu Suspension und/oder Filterkuchen, so dass der Kreislaufmengenstrom an Temperiermedium minimal eingestellt werden kann und die Trocknungszeiten verkürzt werden.

Die erfindungsgemäße Kammerfilterplatte bzw. Druck-/Waschplatte mit zugehörigem Rahmen beinhaltet den erfindungsgemäßen Heiz- bzw. Kühlkörper, der formschlüssig (Fig. 1, 2) oder nicht formschlüssig (Fig. 3, 4) mit einem Rahmen verbunden ist. Der Rahmen kann aus beliebigem Material gefertigt sein, aus Metall, Kunststoff oder einem Kombinationsmaterial, in einer bevorzugten Ausführung aus Kunststoff, in einer besonders bevorzugten Ausführung aus Polyvinylidenfluorid oder Polypropylen, in einer ganz besonders bevorzugten Ausführung aus Polypropylen.

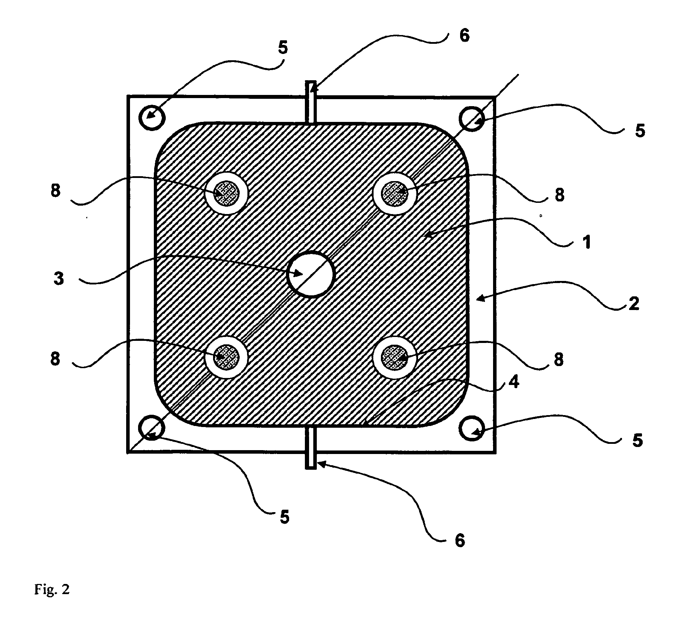

In der formschlüssigen Ausführung kann der Filtratabfluss über eine Vertiefung im Wellelement, so z.B. eine Abflussrinne, die den äußeren Rand des Heiz- bzw. Kühlkörpers beidseitig umläuft und über Bohrungen mit den Filtratablaufkanälen verbunden ist, sichergestellt werden (Fig. 1a), b)). Ebenfalls denkbar ist es, im Rahmen an den Kontaktflächen mit den Wellelementen beidseitig Abflussrinnen auszuführen, die ihrerseits wieder mit den Filtratablaufkanälen verbunden sind (Fig. 2). In einer weiteren Ausführungsform ist es denkbar, je einen in den Abmessungen angepassten, d.h. verkleinerten Heiz- bzw. Kühlkörper mit zwei im Rahmen verankerten Lochblechen, die einen Innenraum zur Filtratabführung bilden, zu verbinden.

In einer bevorzugten Ausführung ist der Heiz- bzw. Kühlkörper nicht formschlüssig über z.B. Stege oder Bolzen mit dem Rahmen verbunden. Durch diese Anordnung bietet sich der Vorteil, dass Wärmebrücken nach außen minimiert werden können, so dass höhere bzw. tiefere Temperiermitteltemperaturen möglich sind, als durch die Wahl der Kunststoffe (Rahmen bzw. im Rahmenbereich anliegende Membrankammerfilterplatte) vorgegeben ist. So können in diesem Beispiel, das die Erfindung veranschaulicht ohne diese darauf zu beschränken, in einer Kombination einer erfindungsgemäßen Kammerfilterplatte aus metallischem Heiz- bzw. Kühlkörper mit metallischem Rahmen mit Membrankammerfilterplatte aus Polypropylen Heizmitteltemperaturen von > 100°C gewählt werden, ohne dass die Membrankammerfilterplatte mit Temperaturen von z.B. > 80°C belastet wird.

Die Kammerfilterplatte wird erfindungsgemäß beidseitig mit Filtermedien ausgestattet, beispielsweise mit einem Überhangfiltertuch oder in einer tropf- und vakuumdichten Ausführung mit zwei Einzelfiltertüchern, die beidseitig im entsprechend ausgerüsteten Rahmen der Kammerfilterplatte befestigt werden, bevorzugt in einer Nut. Bei Wahl eines Überhangtuches kann zur Verbesserung des Vakuums der Bereich der Dichtflächen gummiert werden. Die Druck-/Waschplatte mit zugehörigem Rahmen werden erfindungsgemäß ebenfalls beidseitig mit Filtermedien ausgerüstet, so beispielsweise mit Filtertüchern, Papierfiltern und/oder Tiefenfiltern, die überhängend oder im entsprechend ausgerüsteten Rahmen der Druck-/Waschplatte befestigt werden, bevorzugt in einer Nut.

In einer bevorzugten Ausführung sind die Rahmen mit einer vakuumdichten Randabdichtung versehen, wobei innerhalb der Randabdichtung beidseitig eine integrierte Filtermedienklemmung vorgesehen ist, bevorzugt in einer Nut.

Bei der einem Fachmann ersichtlichen Herstellung der besagten Kammerfilterplatten bzw. Druck-/Waschplatten mit zugehörigem Rahmen werden die oben benannten Teile miteinander verklebt, verschweißt oder unter zusätzlicher Verwendung von Dichtungen verschraubt, der temperierbare Körper dadurch hergestellt, dass die Wellbleche miteinander verbunden werden, so z.B. verklebt, geheftet, genietet, verschraubt oder durch thermische Verfahren z.B. verlötet und/oder verschweißt werden oder aber der Körper gegossen wird, in einer bevorzugten Ausführung werden die Wellbleche gelötet oder geschweißt, in einer besonders bevorzugten Ausführung geschweißt.

Ebenfalls Gegenstand der Erfindung ist eine aus den erfindungsgemäßen Kammerfilterplatten bzw. den erfindungsgemäßen Druck-/Waschplatten mit zugehörigem Rahmen alternierend mit Membrankammerfilterplatten angeordnet aufgebaute Filterpresse. Die Kammerfilterplatten bzw. die Druck-/Waschplatten mit zugehörigem Rahmen bestehen hierbei in einer bevorzugten Ausführung aus metallischen Werkstoffen bzw. aus metallischem Heiz- bzw. Kühlkörper als Kern mit Rahmen aus polymeren Werkstoffen oder polymeren Kompositwerkstoffen, bevorzugt aus Polypropylen oder Polyvinylidenfluorid, besonders bevorzugt Polypropylen, während die Membrankammerfilterplatten aus rein polymeren Werkstoffen oder Kompositwerkstoffen bestehen können.

Die Filterpresse besteht in einer bevorzugten Ausführung aus mehreren erfindungsgemäßen Kammerfilterplatten bzw. Druck-/Waschplatten mit zugehörigem Rahmen alternierend angeordnet mit mehreren mit einer Stützwand versehenen Membrankammerfilterelementen, die randseitig tropf- und vakuumdicht zusammengespannt sind und dazu einen an die Stützwand anschließenden Plattenrahmen aufweisen, wobei die erfindungsgemäßen Kammerfilterplatten bzw. die Druck-/Waschplatten mit zugehörigem Rahmen zwischen sich und den Membrankammerfilterplatten Filterkammern mit darin mündenden Einläufen für die zu filtrierende Suspension bilden. Die der Filterkammer zugekehrte Wandfläche der erfindungsgemäßen Kammerfilterplatte bzw. Druck-/Waschplatten mit zugehörigem Rahmen bildet durch das mit einem Filtermedium belegte Wellenprofil ein an die Filtrat abführenden Kanäle angeschlossenes Rinnensystem. Die Membrankammerfilterplatten tragen ein- oder beidseitig, bevorzugt beidseitig eine mit der Stützwand oder dem Plattenrahmen randseitig dicht verbundene, im übrigen durch ein temperierbares Druckmedium in die Filterkammer vorbewegbare Membran, die auf ihrer der jeweiligen Filterkammer zugekehrten Wandfläche mit einem Filtermedium belegte Profilvorsprünge aufweist, welche unter dem an der Stützwand oder dem Plattenrahmen befestigten Filtermedium ebenfalls ein an die Filtrat abführenden Kanäle angeschlossenes Rinnensystem für das Filtrat bilden.

Die erfindungsgemäßen Filterpresse mit den erfindungsgemäßen Kammerfilterplatten bzw. Druck-/Waschplatten mit zugehörigem Rahmen bietet den Vorteil, dass der Filterkuchen auf beiden Seiten der Kammerfilterplatten bzw. der Druck-/Waschplatten gebildet werden kann, da die Kammerfilterplatte bzw. die Druck-/Waschplatte wie erwähnt erfindungsgemäß beidseitig mit Filtermedien ausgestattet ist und somit im Vergleich zu der Ausführung nach EP 1 088 580 B1 bei gleicher Kammeranzahl die doppelten Filterflächen zur Filtration genutzt werden. Bei gleichen Endkuchenhöhen lässt sich die Filtrationszeit somit reduzieren, bevorzugt auf 15 bis 50 % der Filtrationszeit nach EP 1 088 580 B1, besonders bevorzugt auf 20 bis 40 % der Filtrationszeit, ganz besonders bevorzugt auf ca. 25 %.

Durch die Profilierung der Oberfläche des Heiz- bzw. Kühlelements der Kammerfilterplatte bzw. Druck-/Waschplatte und aufgrund des vorhandenen Filtermediums auf beiden Seiten der Kammerfilterplatte bzw. Druck-/Waschplatte ergibt sich zusätzlich der Vorteil, dass auf einfache Art und Weise ein vollständiger Austrag des getrockneten Filterkuchens aus der Presse sichergestellt werden kann.

Das Verfahren zur Trocknung von Filterkuchen unter Verwendung der erfindungsgemäßen Filterpresse ist ebenfalls Gegenstand der Erfindung. Ein bevorzugtes Verfahren beinhaltet das Eintragen der Suspension in die Filterpresse, den Filtrationsprozess, mindestens eine mechanische Pressung des Filterkuchens durch eine Membran der Membranfilterplatte zum Austrag der Restflüssigkeit, die Trocknung des Filterkuchens durch Temperierung mittels der erfindungsgemäßen Kammerfilterplatte bzw. Druck-/Waschplatte und/oder des temperierbaren Druckmediums in der Membranfilterplatte und/oder durch Evakuieren der Filterkammer über die Suspension eintragenden und/oder die Filtrat ableitenden Kanäle. Zwischen Filtrationsphase und Pressphase kann mindestens eine Waschung über den Suspension eintragenden Kanal und/oder über den Filtrat abführenden Kanal erfolgen. Waschungen können aber auch nach dem ersten Pressschritt erfolgen. Im Rahmen dieses Verfahrens sind durch die Beschaffenheit der erfindungsgemäßen Kammerfilterplatten bzw. Druck-/Waschplatten mit zugehörigen Rahmen in der erfindungsgemäßen Filterpresse Wäschen über den Suspensionskanal bei Kammerfüllungen unter 100% möglich. Gegenüber der Ausführung nach EP 1 088 580 B1 bietet sich durch die Wellenstruktur des Heiz- bzw. Kühlkörpers der Vorteil, dass zusätzlich eine Filtratkanalwäsche von der Filtratabflussseite der Kammerplatte zur Filtratabflussseite der Membrankammerplatte oder umgekehrt durchgeführt werden kann, wie es bei herkömmlichen Membranfilterpressen möglich ist, da außerdem schon nach dem Filtrationsschritt der Filterkuchen über einen Pressschritt konsolidiert werden kann.

Es kann sich als vorteilhaft erweisen, dass der Filterkuchen während der Trocknung unter dem Nachpressdruck der Membran bleibt. Dadurch wird der Filterkuchen in der Filterkammer stabilisiert bzw. der Volumenschwund durch den Flüssigkeitsentzug ausgeglichen, so dass ein Zusammenfallen des Filterkuchens oder eine Rissbildung vermieden wird.

Im Trocknungsschritt des erfindungsgemäßen Verfahrens kommt es darauf an, möglichst schnell die erforderliche Temperatur in den Filterkuchen einzutragen. Im Falle einer thermischen Trocknung kann dies durch Wahl einer hohen Temperiermitteltemperatur und/oder eines guten Wärmeübergangs und/oder eine niedrige Verdampfungstemperatur (niedriger angelegter Druck) erreicht werden, im Falle einer effizienten Kühlung durch die Wahl einer tiefen Temperiermitteltemperatur und/oder eines guten Temperaturübergangs und/oder eine niedrige Verdampfungstemperatur.

In einer Ausführung des erfindungsgemäßen Verfahrens kann ein einziger Temperier- und Druckkreislauf zur Temperierung der erfindungsgemäßen Kammerflterplatte bzw. Druck-/Waschplatte mit zugehörigem Rahmen und zur Temperierung der Membrankammerfilterplatte und zur Ausführung des Pressschrittes durch die Membrankammerfilterplatte verwendet werden (Fig. 9).

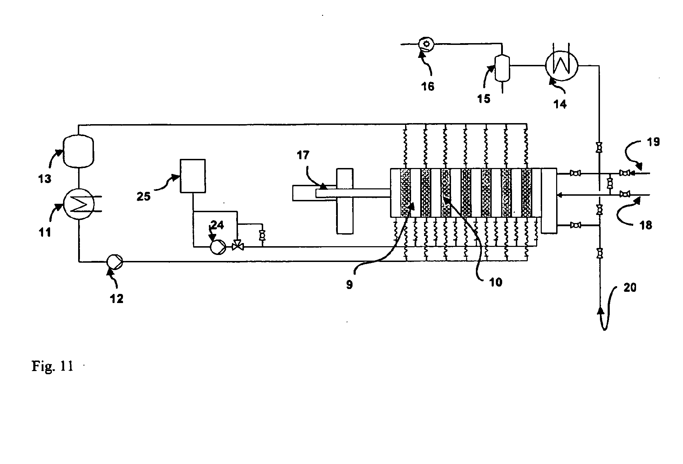

In einer weiteren Ausführungsform des erfindungsgemäßen Verfahrens kann ein Temperierkreislauf zur Temperierung der erfindungsgemäßen Kammerfilterplatte bzw. Druck-/Waschplatte mit zugehörigem Rahmen und einem einfachen Pressmittelanschluss für die Ausführung des Pressschrittes durch die Membrankammerfilterplatte eingerichtet werden. Die Temperatur wird hier nur über die Kammerfilterplatten bzw. Druck-/Waschplatten mit zugehörigem Rahmen eingetragen (Fig. 11). Der Vorteil dieser Ausführungsform besteht darin, vorhandene Filterpressen leicht dieser Ausführungsform gemäß nachrüsten zu können.

In einer bevorzugten Ausführung können durch eine Installation von zwei Temperierkreisläufen im erfindungsgemäßen Verfahren die Temperiermitteltemperaturen einer mit metallischem Heiz- bzw. Kühlkörper ausgestatteten Kammerfilterplatte bzw. Druck-/Waschplatte mit zugehörigem Rahmen und des Druckmediums der Membrankammerfilterplatte unabhängig voneinander eingestellt werden (Fig. 10). Dies hat wiederum den Vorteil, dass schon zu Beginn des Pressschrittes vor dem Schritt der Trocknung die Kammerfilterplatten bzw. Druck-/Waschplatten temperiert, so z.B. aufgeheizt oder stark heruntergekühlt werden können, ohne dass der Membrandruck reduziert werden muss, was eine besonders bevorzugte Ausführung des erfindungsgemäßen Verfahrens darstellt.

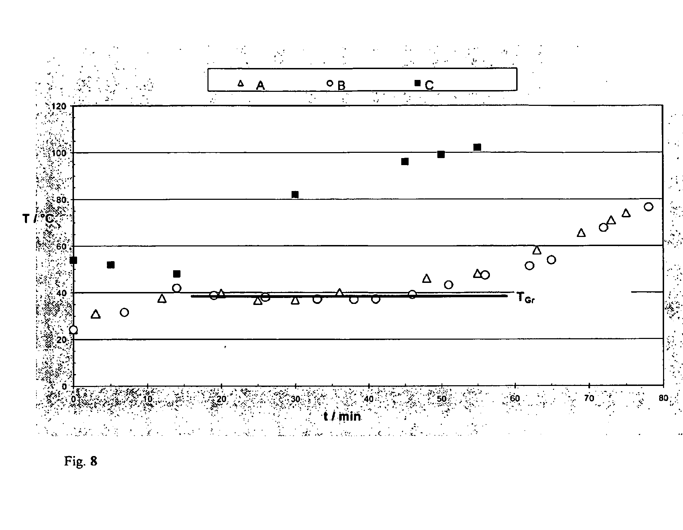

Hierdurch kann der Zeitbedarf für einen thermischen Trocknungsschritt nochmals deutlich reduziert werden. Versuche zeigen z.B. bei einem anorganischen Feststoff, dass nach Beendigung des Pressens und Beginn des Trocknungsschrittes durch Anlegen des Vakuums der erste Trocknungsabschnitt durch Messung einer konstanten Temperatur des Filterkuchens (Kühlgrenztemperatur) schon abgeschlossen und deshalb nicht mehr sichtbar ist (Fig. 8).

Produkte, d.h. sowohl Feststoffe wie auch Filtrate, die über das erfindungsgemäße Verfahren zugänglich werden, sind ebenfalls Gegenstand der Erfindung.

Die erfindungsgemäße Kammerfilterplatte bzw. Druck-/Waschplatte mit zugehörigem Rahmen, eine daraus gefertigte Filterpresse und die verfahrenstechnische Trocknung von Filterkuchen mit Hilfe der erfindungsgemäßen Filterpresse bieten die Vorteile, dass durch die Filtratabführung über beide Flächen der durch die erfindungsgemäße Kammerfilterplatte bzw. die erfindungsgemäße Druck-/Waschplatte mit zugehörigem Rahmen und eine Membrankammerplatte gebildeten Kammer Filtrationszeiten und Zeiten für eine Suspensionskanalwäsche minimiert werden, dass durch die wellenförmige Struktur der Kammerfilterplatte bzw. Druck-Waschplatte und durch die Möglichkeit zur Konsolidierung des Filterkuchens durch Pressen die verfahrenstechnische Möglichkeit der Wäsche und der Evakuierung über den Suspension eintragenden und den Filtrat ableitenden Kanal gegeben ist und dass aufgrund der besonderen Konstruktion der erfindungsgemäßen Kammerfilterplatte bzw. Druck-/Waschplatte die Wärmeübertragung optimiert wird und Zeiten für die Trocknung minimiert werden sowie durch beidseitige Anordnung der Filtermedien der Feststoffaustrag verbessert wird und insbesondere kein Feststoff in der Kammer haften bleibt.

Die erfindungsgemäßen Kammerfilterplatten bzw. Druck-/Waschplatten mit zugehörigem Rahmen und Filterpressen eignen sich insbesondere für die Aufarbeitung von Suspensionen zur Gewinnung und/oder Abtrennung des Feststoffes und/oder des Filtrats aus der chemischen Synthese, von Abwässern und/oder Klärschlämmen, von Sand-, Kies- und/oder Bauschlämmen, von Erz-, Kohlen-, Berge- oder Gesteinsschlämmen im Bereich Bergbau oder für die Verwendung in Verfahren zur Herstellung von kosmetischen, pharmazeutischen und/oder medizinischen Produkten und von Nahrungsmitteln für Mensch und/oder Tier.

Die Erfindung wird nachstehend anhand der Figuren beispielhaft näher erläutert ohne sie jedoch auf diese zu beschränken.

In den Figuren haben die angegebenen Bezugszeichen die folgenden Bedeutungen:
1: Temperierplatte; bzw. Heiz- / Kühlkörper
2: Rahmen
3: (Eck-)Einlaufkanal
4: Abflussrinne
4a: Bohrung(en)
5: Auslaufkanal / Auslaufkanäle
6: Rohr(-nippel)
7: Stege / Bolzen
8: Stütznocken
9: Membrankammerfilterplatte(n)
10: Kammerfilterplatte(n) oder Druck-/Waschplatte(n) mit zugehörigem Rahmen (2)
11, 21: Wärmetauscher
12, 22, 24: Förder- /Druckpumpe
13, 23, 25: Vorlage(behälter)
14: Kondensator
15: Abscheider
16: Vakuumpumpe
17: Gestell
18, 19: Anschluss
20: Filtratablauf
B1, B2, B3: Blech(e)

**Tabelle 1**

| | **Versuch A** | **Versuch B** | **Versuch C** |
|---|---|---|---|
| **Heizmitteltemperatur Metallkammerplatte** | 100 °C | 100 °C | 100 °C |
| **Heizmitteltemperatur PP-Membrankammerplatte** | 80 °C | 60 °C | 60 °C |
| **Heizbeginn Metallkammerplatte** | Nach Pressen | Nach Pressen | Bei Pressbeginn |
| **Absolutdruck (an Vakuumpumpe)** | 40 mbar | 40 mbar | 40 mbar |
| **Heizbeginn PP-Membrankammerplatte** | Nach Pressen | Nach Pressen | Nach Pressen |
| **Kühlgrenztemperatur** | Ca. 38 °C | Ca. 38 °C | Wird aufgrund Aufheizung während Pressen nicht erreicht |

Es zeigen:
- Fig. 1a): eine Kammerfilterplatte mit formschlüssiger Heizplatte und Eckeinlauf mit gedachtem Schnitt entlang A und B.
- Fig. 1b): die gedachte Schnittfläche durch die in Fig. 1 a) dargestellte Kammerfilterplatte
- Fig. 2: eine Kammerfilterplatte mit formschlüssiger Heizplatte und Zentraleinlauf

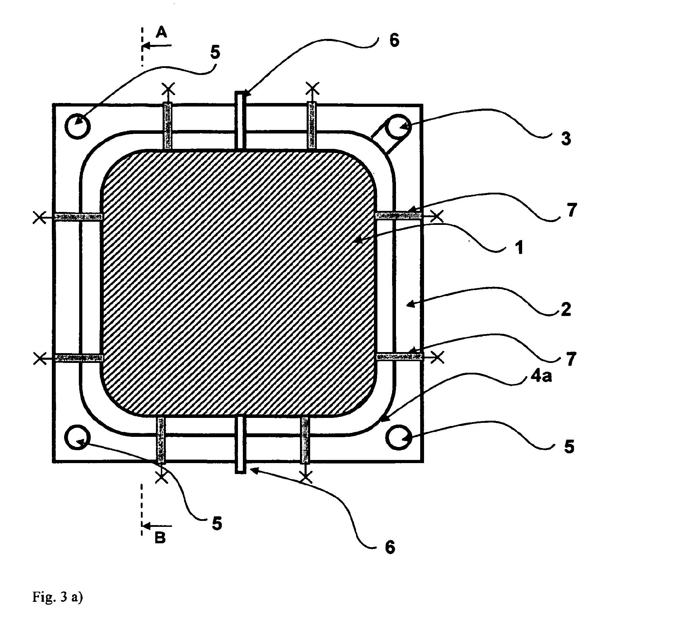

- Fig. 3a): eine Kammerfilterplatte mit nicht-formschlüssiger Heizplatte und Eckeinlauf mit gedachtem Schnitt entlang A und B

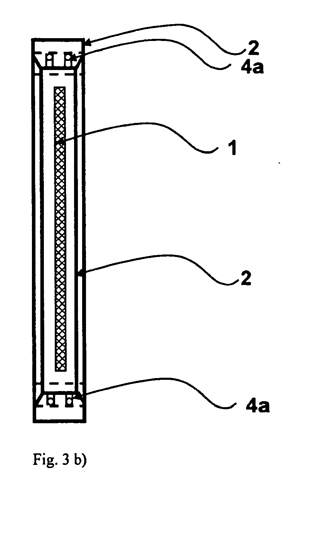

- Fig. 3b): die gedachte Schnittfläche durch die in Fig. 3 a) dargestellte Kammerfilterplatte

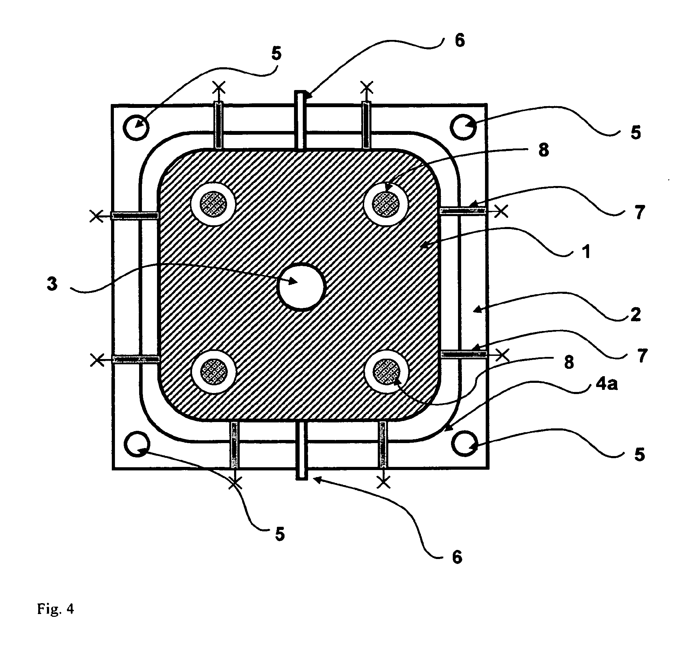

- Fig. 4: eine Kammerfilterplatte mit nicht-formschlüssige Heizplatte und Zentraleinlauf
- Fig. 5: eine Heizplatte mit gedachtem Schnitt
- Fig. 6: die gedachte Schnittfläche einer Heizplatte wie in Fig. 5 beschrieben.
- Fig. 7: die gedachte Schnittfläche einer Heizplatte wie in Fig. 5 beschrieben.
- Fig. 8: die Veränderung der Temperatur des Filterkuchens mit der Trocknungszeit.
- Fig. 9: das Fliessbild einer Membrankammerfilterpresse bzw. Membranrahmenfilter- presse mit einem Heiz- und Druckkreislauf
- Fig. 10: das Fliessbild einer Membrankammerfilterpresse bzw. Membranrahmenfilter- presse mit zwei Heiz- und Druckkreisläufen
- Fig. 11: das Fließbild einer Membrankammerfilterpresse bzw. Membranrahmenfilterpresse mit einem Heizkreislauf für die Kammerfilterplatten und einem Presswasseran- schluss für die Membranfilterplatten

Tab. 1 die in Fig. 8 graphisch aufgetragenen Werte in Tabellenform.

### Beispiele

In Fig. 1 a) ist die Aufsicht auf eine erfindungsgemäße Kammerfilterplatte ausgeführt mit formschlüssiger Temperierplatte **1** aus Metall in einem Metall-/Kunststoffrahmen **2** dargestellt. Die einzutragende Suspension wird über den Eckeinlauf **3** in die Filtrationskammer geleitet und das Filtrat über die umlaufende als Vertiefung in den gewellten Elementen realisierte Filtratabflussrinne **4,** die über Bohrungen **4a** mit den Filtratauslaufkanälen **5** verbunden ist, abgeführt. Das Temperiermedium wird über die Rohrnippel **6** zu- und abgeführt. Eingezeichnet ist ein gedanklicher Schnitt entlang der gestrichelten Linie. Die folgende Figur zeigt die gedachte Schnittfläche der Kammerfilterplatte aus Blickrichtung der Pfeile A und B.

In Fig. 1 b) ist die Aufsicht auf die gedachte Schnittfläche einer Kammerfilterplatte wie in Fig. 1 a) beschrieben zu sehen. Die Temperierplatte **1** im Rahmen **2** ist beidseitig und umlaufend mit einer Abflussrinne **4** versehen, die über Bohrungen **4a** mit den Filtratauslaufkanälen **5** verbunden sind.

Fig. 2 zeigt die Aufsicht auf eine erfindungsgemäße Kammerfilterplatte ausgeführt mit formschlüssiger Temperierplatte **1** aus Metall in einem Metall-/Kunststoffrahmen **2.** Die einzutragende Suspension wird über den Zentraleinlauf **3** in die Filtrationskammer geleitet und das Filtrat über die umlaufende, im Rahmen **2** an der Kontaktfläche mit den Wellelementen realisierte Abflussrinne **4,** die über Bohrungen **4a** mit den Filtratauslaufkanälen **5** verbunden ist, abgeführt. Das Temperiermedium wird über die Rohrnippel **6** zu- und abgeführt. Die Stütznocken **8** stabilisieren die Filtrationskammer.

In Fig. 3 a) ist die Aufsicht auf eine erfindungsgemäße Kammerfilterplatte ausgeführt mit nicht-formschlüssiger Temperierplatte **1** aus Metall in einem Metall-/Kunststoffrahmen **2** dargestellt. Die einzutragende Suspension wird über den Eckeinlauf **3** in die Filtrationskammer geleitet und das Filtrat über die Bohrungen **4a,** die den Zwischenraum zwischen Rahmen **2** und Temperierplatte **1** mit den Filtratauslaufkanälen **5** verbinden, abgeführt. Das Temperiermedium wird über die Rohrnippel **6** zu- und abgeführt. Die Temperierplatte **1** und der Rahmen **2** werden über Stege und/oder Bolzen **7** miteinander verbunden. Eingezeichnet ist ein gedanklicher Schnitt entlang der gestrichelten Linie. Die folgende Figur zeigt die gedachte Schnittfläche der Kammerfilterplatte aus Blickrichtung der Pfeile A und B.

In Fig. 3 b) ist die Aufsicht auf die gedachte Schnittfläche einer Kammerfilterplatte wie in Fig. 3 a) beschrieben zu sehen. Der Rahmen **2** ist mit Bohrungen **4a** versehen, die den Zwischenraum zwischen Rahmen **2** und Temperierplatte **1** mit den Filtratauslaufkanälen **5** verbinden.

Fig. 4 zeigt die Aufsicht auf eine erfindungsgemäße Kammerfilterplatte ausgeführt mit nicht-formschlüssige Temperierplatte **1** aus Metall in einem Metall-/Kunststoffrahmen **2.** Die einzutragende Suspension wird über den Zentraleinlauf **3** in die Filtrationskammer geleitet und das Filtrat über die Bohrungen **4a,** die den Zwischenraum zwischen Rahmen **2** und Temperierplatte **1** mit den Filtratauslaufkanälen **5** verbinden, abgeführt. Das Temperiermedium wird über die Rohrnippel **6** zu- und abgeführt. Die Stütznocken **8** stabilisieren die Filtrationskammer. Die Temperierplatte **1** und der Rahmen **2** werden über Stege und/oder Bolzen **7** miteinander verbunden.

Fig. 5 zeigt die Aufsicht auf eine Temperierplatte ohne Rahmen, die entlang der gestrichelten Linie gedanklich geschnitten wird. Die folgenden Figuren zeigen die gedachte Schnittfläche der Temperierplatte aus Blickrichtung des Pfeils A.

Fig. 6 zeigt die Aufsicht auf die gedachte Schnittfläche einer Temperierplatte wie in Fig. 5 beschrieben. Die Temperierplatte besteht aus zwei gewellten Blechen, die um 90° gegeneinander versetzt angeordnet sind. Das untere Blech **B1** ist als gewellte Kante zu sehen, während das obere Blech **B2** in der Seitenaufsicht die äußerste Welle zeigt. Die Bleche sind an den Außenkanten und an den Berührungspunkten durch Schweißung oder Lötung miteinander verbunden.

Fig. 7 zeigt die Aufsicht auf die gedachte Schnittfläche einer Temperierplatte wie in Fig. 5 beschrieben. Die Temperierplatte besteht aus drei gewellten Blechen, die jeweils um 90° gegeneinander versetzt angeordnet sind. Das unterste und das oberste Blech **B1** bzw. **B3** sind entsprechend als gewellte Kante zu sehen, während das mittlere Blech **B2** in der Seitenaufsicht die äußerste Welle zeigt. Die Bleche sind an den Außenkanten und an den Berührungspunkten durch Schweißung oder Lötung miteinander verbunden.

Fig. 8 zeigt die Veränderung der Temperatur des Filterkuchens mit der Trocknungszeit. In Versuch A, B und C wird eine anorganischer Feststoff in der erfindungsgemäßen Kammerfilterpresse aus Kammerfilterplatten mit metallischem Heiz- bzw. Kühlkörper und Membrankammerfilterplatten aus Polypropylen nach dem erfindungsgemäßen Verfahren filtriert und getrocknet. Die Temperiermitteltemperatur für den metallischen Heiz- bzw. Kühlkörper in allen drei Versuchen beträgt 100°C und die des Druckmittels für die Membrankammerplatte in Versuch A 80°C, in den Versuchen B und C sogar nur 60°C. Es wird in allen drei Versuchen ein Unterdruck von 40 mbar, gemessen an der Vakuumpumpe, angelegt. Allein bei Versuch C wird der Heiz- bzw. Kühlkörper der Kammerfilterplatte schon zu Beginn des Pressschritts aufgeheizt, während bei Versuch A und B der Heizbeginn erst nach dem Pressen erfolgt. Bei allen drei Versuchen wird das Druckmittel erst nach dem Pressschritt aufgeheizt. Bei Versuch A und B beobachtet man im Laufe der ersten ca. 15 min ein langsames Ansteigen der Filterkuchentemperatur auf ca. 38°C, die Kühlgrenztemperatur, wo sie ca. 40 min stagniert während Restfiltrat aus dem Filterkuchen verdampft, bevor sie im Laufe von weiteren 25 min auf ca. 80°C ansteigt. Bei Versuch C beobachtet man aufgrund des Heizbeginns bei Beginn des Pressschrittes eine höhere Ausgangstemperatur von ca. 55°C, die innerhalb der ersten 15 min langsam auf ca. 45°C abfällt, um dann innerhalb der nächsten 15 min auf 80°C anzusteigen und nach weiteren 20 min 100°C zu erreichen. Eine Stagnation auf der Kühlgrenztemperatur wird hier nicht beobachtet.

Fig. 9 zeigt das Fließbild einer Membrankammerfilterpresse bzw. Membranrahmenfilterpresse mit einem Heiz- und Druckkreislauf. Membrankammerfilterplatten **9** und Kammerfilterplatten bzw. Druck-/Waschplatten mit dazugehörigem Rahmen **10** sind im Wechsel in dem Gestell **17** angeordnet. Über den Anschluss **18** wird die Membrankammerfilterpresse mit Suspension befüllt. Bei einer Spaltwäsche wird über **18** auch die Waschflüssigkeit aufgegeben, bei der Filtratkanalwäsche erfolgt dies über Anschluss **19.** Das Filtrat wird über den Filtratablauf **20** abgezogen.

Membrankammerfilterplatten **9** und Kammerfilterplatten bzw. Druck-/Waschplatten mit zugehörigem Rahmen **10** bilden einen Heiz- / Druckkreislauf bestehend aus einer Vorlage **13,** einem Wärmetauscher **11** und einer Förder- und Druckpumpe **12.** Mit diesem Kreislauf kann der Filterkuchen gepresst werden. Während der Trocknungsphase wird die Kreislaufflüssigkeit über **11** erwärmt. Gleichzeitig wird der Filtratablauf **20** geschlossen und die Inerten über die Vakuumpumpe **16** nach Kondensation im Kondensator **14** und Abscheidung im Abscheider **15** abgezogen.

Fig. 10 zeigt das Fliessbild einer Membrankammerfilterpresse bzw. Membranrahmenfilterpresse mit zwei Heiz- und Druckkreisläufen. Im Unterschied zu Fig. 9 haben Membrankammerfilterplatten und Kammerfilterplatten bzw. Druck-/Waschplatten mit zugehörigem Rahmen separate Heizkreisläufe (Kammerfilterplatten bzw. Druck-/Waschplatten mit zugehörigem Rahmen **10,** Wärmetauscher **11,** Druckpumpe **12,** Vorlage **13** bzw. Membrankammerfilterplatten **9,** Wärmetauscher **21,** Druckpumpe **22,** Vorlage **23**). Der Vorteil dieser Anordnung ist, dass verschiedene Temperaturen in den Kreisläufen eingestellt werden können. Weiterhin kann hier der Kreislauf über die Kammerfilterplatten bzw. die Druck-/Waschplatten mit zugehörigem Rahmen schon bei Beginn der Pressphase mit hoher Temperatur eingeschaltet werden.

Fig. 11 zeigt das Fließbild einer Membrankammerfilterpresse bzw. Membranrahmenfilterpresse mit einem Heizkreislauf für die Kammerfilterplatten und einem Presswasseranschluss für die Membrankammerfilterplatten. Im Unterschied zu Fig. 9 und Fig. 10 kann hier die Wärme nur über die Kammerfilterplatten bzw. die Druck-/Waschplatten mit zugehörigem Rahmen 10 in die Filterpresse zur Trocknung eingebracht werden. Aufgrund der guten Wärmeleitung in den Kammerfilterplatten bzw. den Druck-/Waschplatten mit zugehörigem Rahmen 10 und der Möglichkeit, eine höhere Temperatur als für z.B. PP zulässig einzustellen, wird die Trocknungsphase jedoch nicht oder nur geringfügig verlängert. Ein großer Vorteil liegt darin, dass vorhandene Filterpressen mit einem herkömmlichen Presswassersystem mit Druckpumpe 24 und Vorlage 25 leicht nachgerüstet werden können.

## Patentansprüche

1. Temperierbare Kammerfilterplatte oder Druck-/Waschplatte (10) mit zugehörigem Rahmen (2) mit Heiz- bzw. Kühlkörper (1), **dadurch gekennzeichnet, dass** als Heiz- bzw. Kühlkörper (1) mindestens zwei miteinander verbundene gewellte Elemente, die mindestens einen Hohlraum bilden, der von einem temperierbaren Medium durchströmbar ist, verwendet werden, wobei der Heiz- bzw. Kühlkörper (1) mit dem Rahmen (2) über Stege und/oder Bolzen (7) verbunden ist und wobei hierdurch ein Zwischenraum zwischen Heiz- bzw. Kühlkörper (1) und Rahmen (2) ausgebildet ist.

2. Kammerfilterplatte oder Druck-/Waschplatte (10) gemäß Anspruch 1, **dadurch gekennzeichnet, dass** beidseitig Filtermedien an der Kammerfilterplatte oder Druck-/Waschplatte (10) verwendet werden.

3. Alternierend aus Membrankammerfilterplatten (9) und Kammerfilterplatten und/oder Druck-/Waschplatten (10) mit zugehörigen Rahmen (2) aufgebaute Membrankammerfilterpresse, **dadurch gekennzeichnet, dass** Kammerfilterplatten oder Druck-/Waschplatten (10) gemäß Anspruch 1 oder 2 verwendet werden.

4. Membrankammerfilterpresse gemäß Anspruch 3, **dadurch gekennzeichnet, dass** die verwendeten Membrankammerfilterplatten (9) beidseitig mit Membran und/oder Filtermedium ausgestattet sind.

5. Verfahren zur Trocknung von Filterkuchen unter Verwendung einer Membrankammerfilterpresse gemäß Anspruch 3 oder 4.

6. Verfahren gemäß Anspruch 5, **dadurch gekennzeichnet, dass** die Kammerfilterplatte oder Druck-/Waschplatte (10) gemäß Anspruch 1 oder 2 in der Membrankammerfilterpresse gemäß einem der Ansprüche 3 oder 4 zu Beginn des Pressschritts temperiert wird.

7. Verfahren gemäß einem der Ansprüche 5 oder 6, **dadurch gekennzeichnet, dass** Waschungen des Filterkuchens und/oder Evakuierung der Filterkammer über den Suspension eintragenden und/oder den Filtrat ableitenden Kanal erfolgen können.

8. Verfahren gemäß einem der Ansprüche 5 bis 7, **dadurch gekennzeichnet, dass** Membrankammerfilterplatten (9) und Kammerfilterplatten bzw. Druck-/Waschplatten (10) mit zugehörigem Rahmen (2) mit je einem eigenen Temperier-/Druckkreislauf betrieben werden.

9. Verfahren gemäß einem der Ansprüche 5 bis 7, **dadurch gekennzeichnet, dass** die Membrankammerfilterplatten (9) mit einem Pressmittelanschluss und die Kammerfilterplatten bzw. Druck-/Waschplatten (10) mit zugehörigem Rahmen (2) mit einem eigenen Temperier-/Druckkreislauf betrieben werden.

## Claims

1. Temperature-controllable chamber filter plate or pressure/wash plate (10) with associated frame (2) with a heating and cooling body (1), **characterized in that**, as heating and cooling body (1), use is made of at least two interconnected corrugated elements which form at least one cavity through which a temperature-controllable medium can flow, the heating and cooling body (1) being connected to the frame (2) via webs and/or bolts (7) and an intermediate space being formed thereby between heating and cooling body (1) and frame (2).

2. Chamber filter plate or pressure/wash plate (10) according to Claim 1, **characterized in that** filter media are used on both sides on the chamber filter plate or pressure/wash plate (10).

3. Diaphragm chamber filter press made up in alternation of diaphragm chamber filter plates (9) and chamber filter plates and/or pressure/wash plates (10) with associated frame (2), **characterized in that** chamber filter plates or pressure/wash plates (10) according to Claim 1 or 2 are used.

4. Diaphragm chamber filter press according to Claim 3, **characterized in that** the diaphragm chamber filter plates (9) used are equipped on both sides with a diaphragm and/or filter medium.

5. Method of drying filtercakes using a diaphragm chamber filter press according to Claim 3 or 4.

6. Method according to Claim 5, **characterized in that** the chamber filter plate or pressure/wash plate (10) according to Claim 1 or 2 is temperature-controlled at the start of the pressing step in the diaphragm chamber filter press according to one of Claims 3 or 4.

7. Method according to one of Claims 5 or 6, **characterized in that** washings of the filtercake and/or evacuation of the filter chamber can proceed via the channel introducing the suspension and/or removing the filtrate.

8. Method according to one of Claims 5 to 7, **characterized in that** diaphragm chamber filter plates (9) and chamber filter plates or pressure/wash plates (10) with associated frame (2) are operated each with a separate temperature-control/pressure circuit.

9. Method according to one of Claims 5 to 7, **characterized in that** the diaphragm chamber filter plates (9) with a pressing medium connection and the chamber filter plates or pressure/wash plates (10) with associated frame (2) are operated with a separate temperature-control/pressure circuit.

## Revendications

1. Plateau de filtre à chambre ou plateau de compression et de lavage (10) pouvant être tempéré et comprenant un cadre (2) associé avec un corps de chauffage respectivement de refroidissement (1), **caractérisé en ce qu'**en guise de corps de chauffage respectivement de refroidissement (1), on utilise au moins deux éléments ondulés mutuellement reliés, qui forment au moins un espace creux dans lequel il est possible de faire passer un écoulement d'agent pouvant être tempéré, le corps de chauffage respectivement de refroidissement (1) étant relié au cadre (2) par l'intermédiaire de nervures et/ou de broches (7), en conduisant ainsi à la formation d'un espace intermédiaire entre le corps de chauffage respectivement de refroidissement (1) et le cadre (2).

2. Plateau de filtre à chambre ou plateau de compression et de lavage (10) selon la revendication 1, **caractérisé en ce que** l'on utilise un moyen de filtration des deux côtés sur le plateau de filtre à chambre ou plateau de compression et de lavage (10).

3. Filtre-presse à chambres et membranes composée par l'association alternée de plateaux de filtre à chambre et membrane (9) et de plateaux de filtre à chambre ou plateaux de compression et de lavage (10) avec cadre (2) associé, **caractérisé en ce que** l'on utilise des plateaux de filtre à chambre ou plateaux de compression et de lavage (10) selon la revendication 1 ou la revendication 2.

4. Filtre-presse à chambres et membranes selon la revendication 3, **caractérisé en ce que** les plateaux de filtre à chambre et membrane (9) utilisés sont équipés, des deux côtés, d'une membrane et/ou d'un moyen de filtration.

5. Procédé pour le séchage de gâteaux ou tourteaux de filtration en utilisant un filtre-presse à chambres et membranes selon la revendication 3 ou la revendication 4.

6. Procédé selon la revendication 5, **caractérisé en ce que** l'on tempère le plateau de filtre à chambre ou plateau de compression et de lavage (10) selon la revendication 1 ou la revendication 2 dans le filtre-presse à chambres et membranes selon l'une des revendications 3 ou 4, au début de l'étape de pressage ou de compression.

7. Procédé selon l'une des revendications 5 ou 6, **caractérisé en ce que** des lavages du gâteau de filtration et/ou la mise sous vide de la chambre de filtre peuvent s'effectuer par l'intermédiaire du canal d'entrée de la suspension et/ou d'évacuation du filtrat.

8. Procédé selon l'une des revendications 5 à 7, **caractérisé en ce que** l'on fait fonctionner des plateaux de filtre à chambre et membrane (9) et des plateaux de filtre à chambre ou plateaux de compression et de lavage (10) avec cadre (2) associé, respectivement par l'intermédiaire de leur propre circuit permettant de tempérer/circuit de pression.

9. Procédé selon l'une des revendications 5 à 7, **caractérisé en ce que** l'on fait fonctionner les plateaux de filtre à chambre et membrane (9) par l'intermédiaire d'un raccord d'agent de pression, et les plateaux de filtre à chambre ou plateaux de compression et de lavage (10) avec cadre (2) associé, par l'intermédiaire d'un circuit permettant de tempérer/circuit de pression, qui leur est propre.
